# EUROPEAN PATENT APPLICATION

(11) **EP 1 961 899 A2**
(43) Date of publication of application: **27.08.2008**
(21) Application number: 08151659.3
(22) Date of filing: 20.02.2008
(51) Int. Cl.: E05D 11/10

(54) **Device for hinging and supporting a vehicle bonnet**

(30) Priority: 21.02.2007 IT TO20070121
(71) Applicant: Fiat Group Automobiles S.p.A., 10135 Torino (TO) (IT)
(72) Inventor: FLORIS, Ezio, 10135, TORINO (IT); TIBALDI, Luciano, 10135, TORINO (IT)
(74) Representative: Jorio, Paolo

(57) **Abstract**

Device (3) for hinging and supporting a vehicle bonnet, which is rotatable with respect to a body of the vehicle about a first substantially horizontal hinging axis (7) between a raised open position and a lowered closed position; the device (3) has a bracing element (10) which is rotatable with respect to the body about a second substantially horizontal hinging axis (11) between a lowered rest position and a raised operating position where a top end (12) of the bracing element (10) keeps the bonnet (1) in the open position; a spring (30) exerts a thrust on the bracing element (10) so as to bias it towards its raised operating position in order to raise automatically the bracing element (10) when the bonnet (1) is rotated towards the open position until the bracing element (10) is stopped by a stop surface (26) which is fixed with respect to the bonnet (1).

## Description

The present invention relates to a device for hinging and supporting a vehicle bonnet.

On a vehicle, in particular a motor vehicle, it is known to use a bonnet, in particular an engine bonnet, which is rigidly joined to a pair of levers which are hinged on the body of the vehicle so as to allow the bonnet to rotate about a horizontal hinging axis between an open position and a closed position.

At the same time, a support device is envisaged for keeping the bonnet in the open position. The support device normally comprises a rod which is hinged at one end on the body of the vehicle and is displaced manually between a rest position, where the rod is arranged in a substantially horizontal position and is fixed releasably by means of snap-engagement onto the body, and an operating position, where the rod is arranged in a raised position and has a top end which supports the bonnet in the open position.

There exists the need to improve the bonnet support device so as to facilitate the bonnet opening operations and preferably reduce the dimensions compared to the known solutions described above.

The object of the present invention is to provide a device for hinging and supporting a vehicle bonnet which allows the requirements mentioned above to be satisfied in a simple and low-cost manner.

According to the invention a device for hinging and supporting a vehicle bonnet is provided, the bonnet being rotatable with respect to a body of the vehicle about a first substantially horizontal hinging axis between a raised open position and a lowered closed position, the device comprising a bracing element which is rotatable with respect to the said body about a second substantially horizontal hinging axis between a lowered rest position and a raised operating position where a top end of the said bracing element keeps the said bonnet in the raised open position,
characterized in that it comprises:
- resilient means exerting a thrust on the said bracing element so as to bias it towards its raised operating position in order to raise automatically the said bracing element when the said bonnet is rotated towards the raised open position;
- a stop surface which is fixed with respect to the said bonnet so as to stop the automatic raising of the said bracing element when the raised operating position is reached.

The present invention will now be described with reference to the accompanying drawings which illustrate a non-limiting example of embodiment thereof in which:
Figure 1 shows schematically a preferred embodiment of the device for hinging and supporting a vehicle bonnet in accordance with the principles of the present invention;
Figure 2 shows the device according to Figure 1 in a different operating position;
Figure 3 is a cross-section, on a larger scale and with parts removed for the sake clarity, along the line III-III of Figure 2; and
Figure 4 shows a perspective view of a detail of the device during a movement between the different positions shown in Figures 1 and 2.

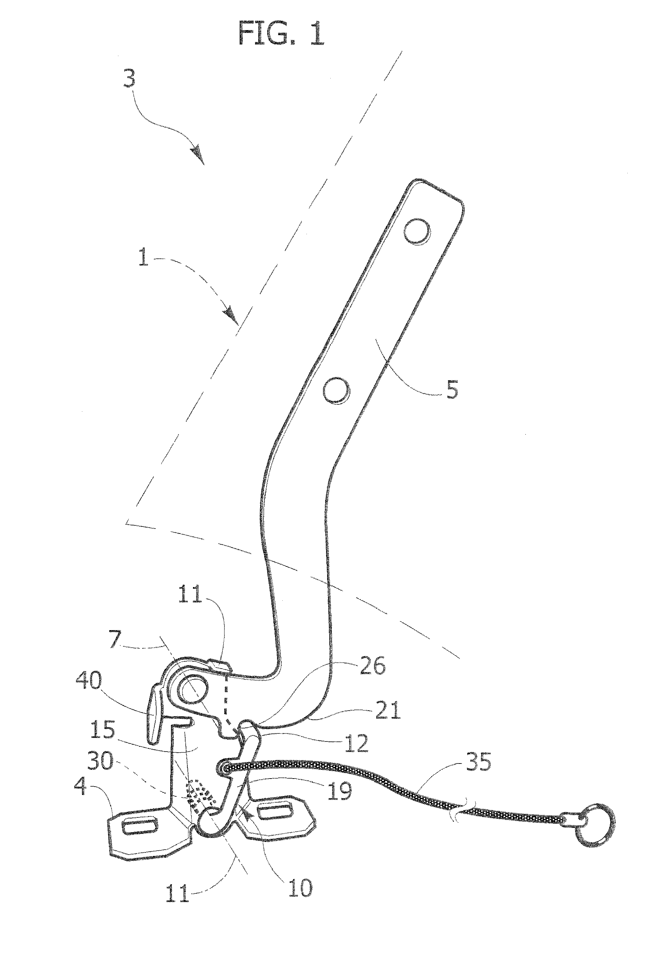

In Figure 1, 1 denotes, in its entirety, a bonnet, in particular an engine bonnet (partly and schematically shown as a broken line) which is connected to a body (not shown) of an associated vehicle, in particular a motor vehicle, by means of a hinging and support device 3.

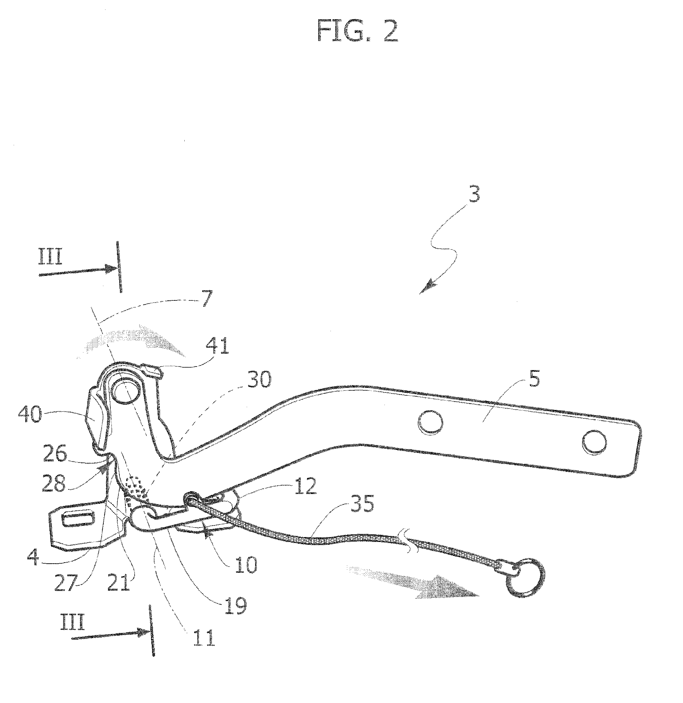

The device 3 comprises a bracket 4 which is fixed to the body in a manner not shown and a lever 5 which is connected in a fixed position to a bottom surface of the bonnet 1 in a manner not shown and is hinged on the bracket 4 by means of a hinging pin so as to rotate about an axis 7 which is substantially horizontal with respect to the body and cause rotation of the bonnet 1 between a lowered closed position (Figure 2) and a raised open position (Figure 1).

The device 3 also comprises a support member defining a bracing element 10 which is rotatable with respect to the body about a substantially horizontal hinging axis 11 parallel to the axis 7, between a lowered rest position (Figure 2) and a raised operating position (Figure 1) where a top end 12 of the bracing element 10 keeps the bonnet 1 in the open position.

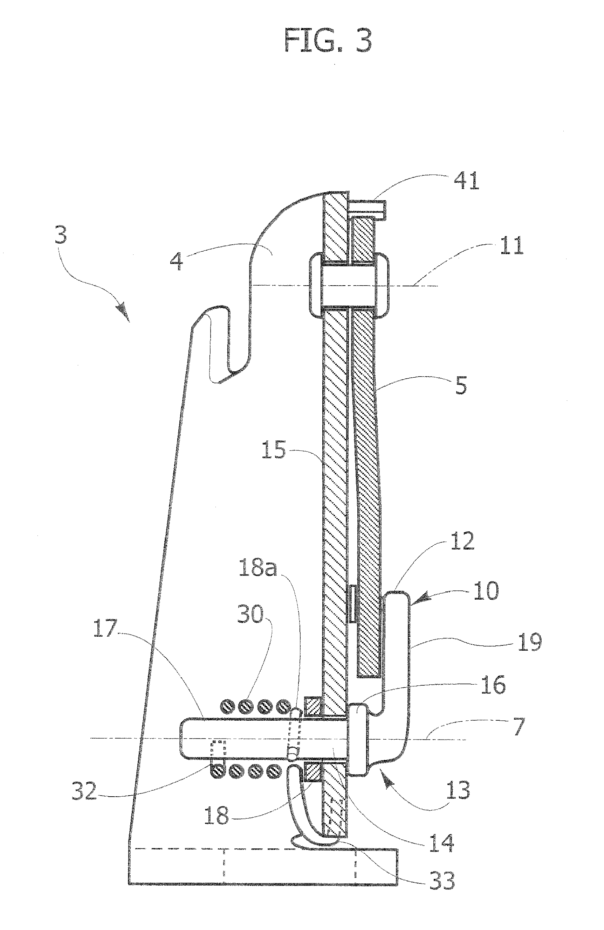

With reference to Figure 3, the bracing element 10, at the opposite end, comprises a pin 13 which extends along the axis 11 and comprises a middle section 14 which is hinged directly with a vertical wall 15 of the bracket 4; a section 16 with a larger diameter arranged so as to bear axially against the wall 15; and a section 17 which projects axially from the wall 15 on the opposite side to the section 16.

The pin 13 is moreover retained axially with respect to the wall 15 by means of a disc 18 which is fitted onto the section 17 and is in turn kept in bearing contact against the wall 15 by a pin which extends radially through the section 17 of the pin 13.

The bracing element 10 also comprises an arm 19 which extends radially from the section 16 as far as the end 12.

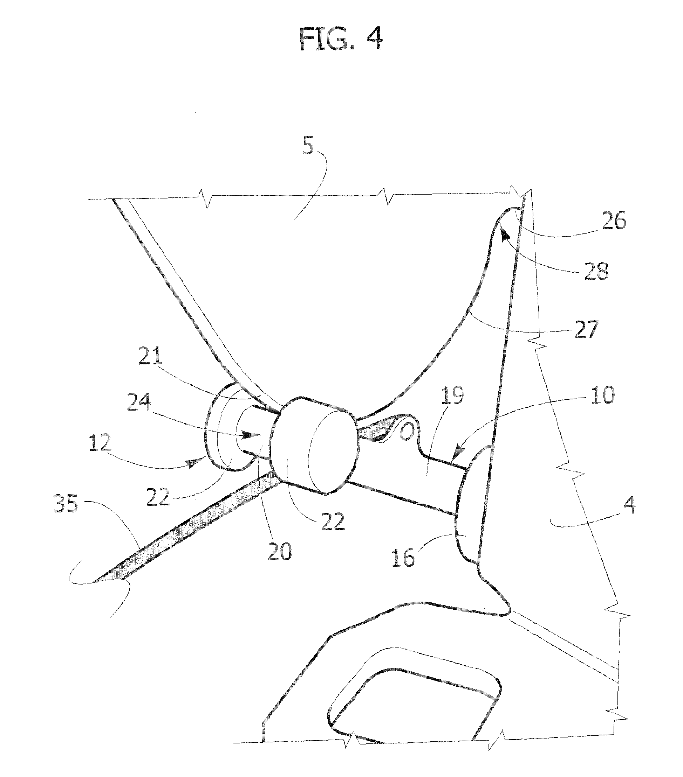

With reference to Figure 4, the end 12 comprises a middle support section 20 which is substantially parallel to the axes 7 and 11 and delimited by a cylindrical surface which is slidably engaged with a shaped track 21 which is integral with the bonnet 1 and in particular defined by a bottom portion of the lever 5. The end 12 also comprises two shoulders 22 which are perpendicular to the axis of the section 20 and arranged on opposite sides of the section 20 and which have an outer diameter which is greater than that of the section 20 and define a guide seat 24 inside which the track 21 slides.

The track 21 comprises two stop surfaces 26, 27 which face each other and define together a recess 28 for retaining the section 20 when the bracing element 10 is in the raised operating position. The recess 28 may be disengaged from the section 20 only after further raising the bonnet 1 from its open position, so as to bring the surface 27 above the trajectory of rotation of the section 20 and therefore allow the return of the bracing element 10 into its lowered rest position.

With reference to Figure 3, the device 3 comprises a resilient member 30 which exerts a torsional thrust which brings the bracing element 10 automatically into the raised operating position when the bonnet 1 is raised from its closed position. In particular the resilient member 30 consists of a helical spring which is wound coaxially around the section 17 and has its ends 32,33 fastened to the pin 13 and to wall 15, respectively. In particular, the end 32 is inserted and gripped inside a slit (not shown) in the section 17 of the pin 13, while the end 33 extends alongside the disc 18 and is arranged so as to rest against an edge of the wall 15.

With reference to Figure 1 the device 3 also comprises a transmission piece 35, for example a cable, which is connected in a fixed position to the arm 19 and can be operated manually by means of pulling so as to bring the bracing element 10 into its lowered rest position against the thrust of the spring 30.

In accordance with that shown in Figures 1 and 2, the device 3 also comprises a bottom lug 40 and a top lug 41 which are formed as one piece with the bracket 4 and define respective angular end-of-travel stops for the lever 5 about the axis 7.

The operating principle of the device 3 can be understood from the description given above. In particular, when the bonnet 1 is rotated manually into its open position (Figure 4), the bracing element 10 is raised automatically as a result of the thrust of the spring 30 and travels along the track 21 until the section 20 passes over the bottom apex defined by the surface 27 and snap engages against the surface 26 which therefore stops automatic raising of the bracing element 10 and thus defines the raised operating position reached by the bracing element 10.

At this point, by lowering the bonnet 1 slightly using the weight of the bonnet 1 itself, the section 20 of the bracing element 10 engages inside the recess 28 and is locked by the surfaces 26,27 so that it cannot make any angular movements about the axis 11. In this way the bonnet 1 is stably supported in the open position.

As mentioned above, in order to bring the bonnet 1 into the closed position, it is necessary to raise the bonnet 1 slightly as far as the end-of-travel position defined by the lug 41, pull the cable 35 in order to lower the bracing element 10 through an angle such as to pass beyond the bottom apex defined by the surface 27 and, finally, let the bonnet 1 down while keeping the cable 35 pulled. During the downward movement of the bonnet 1, the track 21 then pushes further downwards the bracing element 10 into its lowered rest position.

From the above it is clear that the device 3 allows simple opening of the bonnet 1 compared to the known solutions which do not have the spring 30 and the track 21 and is compact since the bracing element 10 is directly hinged on the bracket 4 and the track 21 is formed directly on the lever 5.

From the above it is clear, finally, that the device 3 described may be subject to modifications and variations which do not depart from the scope of protection of the present invention as defined by the accompanying claims.

In particular, the axes 7 and 11 could, if necessary, not be parallel and/or the spring 30 could be of a different type and/or arranged in a different position from that indicated by way of example.

## Claims

1. Device (3) for hinging and supporting a vehicle bonnet, the bonnet (1) being rotatable with respect to a body of the vehicle about a first substantially horizontal hinging axis (7) between a raised open position and a lowered closed position; the device comprising a bracing element (10) which is rotatable with respect to the said body about a second substantially horizontal hinging axis (11) between a lowered rest position and a raised operating position where a top end (12) of the said bracing element (10) keeps the said bonnet (1) in the raised open position;
**characterized in that** it comprises:
- resilient means (30) exerting a thrust on the said bracing element (10) so as to bias it towards its raised operating position in order to raise automatically the said bracing element (10) when the said bonnet (1) is rotated towards the raised open position;
- a stop surface (26) which is fixed with respect to the said bonnet (1) so as to stop automatic raising of the said bracing element (10) when the raised operating position is reached.

2. Device according to Claim 1, **characterized in that** it comprises transmission means (35) connected to the said bracing element (10) and able to be operated manually so as to pull the said bracing element (10) towards its lowered rest position against the thrust of the said resilient means (10).

3. Device according to any one of the preceding claims, **characterized in that in that** it comprises a further stop surface (27) which is fixed with respect to the said bonnet (1), the said stop surfaces (26,27) defining between them a recess (28) which has its concavity directed downwards, retains the said top end (12) when the said bracing element (10) is in the raised operating position and can be disengaged from the said top end (12) only after further raising the said bonnet (1) from the said raised open position.

4. Device according to any one of the preceding claims, **characterized in that** the said first and second hinging axes (7,11) are parallel to each other.

5. Device according to Claim 4, **characterized in that** the said top end (12) comprises a support section (20) substantially parallel to the said first and second hinging axes (7,11) and slidable along a shaped track (21) which is fixed with respect to the said bonnet (1) and comprises the said stop surface (26).

6. Device according to Claim 5, **characterized in that** the said top end (12) comprises two shoulders (22) arranged on opposite sides of the said support section (20) and having radial dimensions greater than that of the said support section (20) so as to define a guide seat (24) inside which the said shaped track (21) slides.

7. Device according to any one of the preceding claims, **characterized in that** it also comprises a fastening bracket (5) which is fixed with respect to the said body; and a lever (5) which is fixed with respect to the said bonnet (1) and hinged on the said fastening bracket (4) about the said first hinging axis (7); the said bracing element (10) being hinged about the said second hinging axis (11) directly on the said fastening bracket (4); the said stop surface (26) being formed as one piece with the said lever (5).

8. Device according to Claim 7, **characterized in that** it comprises two stop lugs (40,41) which are formed as one piece with the said fastening bracket (4) and define respective angular end-of-travel stops for the said lever (5) about the said first hinging axis (7).

9. Device according to any one of the preceding claims, **characterized in that** the said resilient means (30) comprise a helical spring arranged coaxially with the said second hinging axis (11).
